# EUROPEAN PATENT APPLICATION

(11) **EP 3 076 689 A1**
(43) Date of publication of application: **05.10.2016**
(21) Application number: 16162610.6
(22) Date of filing: 29.03.2016
(51) Int. Cl.: H04W 4/04, H04W 4/22

(54) **METHOD AND APPARATUSES FOR COLLECTING AND STORING INFORMATION ABOUT AN EVENT OCCURENCE**

(30) Priority: 31.03.2015 EP 15161995
(71) Applicant: IPCom GmbH & Co. KG, 82049 Pullach (DE)
(72) Inventor: SCHMIDT, Andreas, 38124 Braunschweig (DE); LUFT, Achim, 38118 Braunschweig (DE); HANS, Martin, 31162 Bad Salzdetfurth (DE); BIENAS, Maik, 38170 Schöppenstedt (DE)
(74) Representative: Tomlinson, Edward James

(57) **Abstract**

The present invention provides a method of collecting information relating to an event occurrence, the method comprising transmitting by a first device a request message in response to the event occurrence, the request message causing one or more request message receiving devices to store and preserve information of possible relevance to the event occurrence and to transmit an event identifier for enabling subsequent retrieval of the information.

## Description

The present invention relates to vehicle to vehicle (V2V), vehicle to pedestrians (V2P), and vehicle to infrastructure (V2I) communication. These types of communication can be termed generally "V2x" communication, where "x" represents another device. An important area for V2x communications is that of traffic safety such as pedestrian warning and collision warning. Current use cases in 3GPP are the following:
Forward Collision Warning
Control Loss Warning
Emergency Vehicle Warning
Emergency Vehicle Stop
Cooperative Adaptive Cruise Control and Platooning
Road Safety Services
Queue Warning
Automated Parking System

Roadside units (RSU) in particular are planned to be at the centre of V2I communication. In state of the art scenarios the roadside units collect data from passing vehicles and send out warnings and additional traffic information to the vehicles on the road. The information collected in such RSUs would be beneficial to be used as witness information in case of accidents or other traffic offenses. Also detailed data from mobile network operators (MNOs) like Proximity Services information and detailed positioning data that exceeds the usual amount of data preservation would be helpful for law enforcement.

US 8,068,016 B2 describes a method for broadcasting witness information related to a vehicular environment using a multi-hop broadcast network of nodes, and wherein the nodes include a source node and a set of relay nodes in a plurality of zones, wherein each node includes a transceiver and a processor for performing steps of the method, and wherein the vehicular environment includes a plurality of vehicles, and wherein each vehicle is equipped with one of the nodes, comprising the steps of sensing an event at a location in the vehicular environment by the source node broadcasting, in response sensing the event, an alert message including the location of the event by the source node receiving the alert message in the set of relay nodes in the plurality of zones rebroadcasting the alert message by selected relay nodes selected by the distance to the event, and further comprising receiving the alert message and broadcasting witness messages by the selected relay nodes in response to receiving the alert message, wherein each witness message includes witness information related to the event, wherein the witness information depends on angles between the selected relay nodes and the source node with respect to a direction of travel of the vehicles, and vehicle identification number of the selected relay nodes.

US 2014/0225719 A1 describes a system in which a vehicle experiencing an alarm triggering event is able to activate surveillance devices in a nearby vehicle or non-vehicle security system. Data collected by the nearby entity is automatically transferred to one of a central server, another vehicle or an authorized entity.

Collecting witness information by a driver's V2x unit implies privacy issues with all other road users. Firstly the driver is not authorized to collect information from other units like RSUs, V2x units of other cars, MNO's cells, and other infrastructure like dashboard cameras. Secondly from information security perspective it is difficult to load and store data to a unit and protect these data from the user and or legal owner of the device. Therefore it is beneficial if only particular authorities access most data that is relevant for witness information.

On the other hand the level of detail of the data preserved by involved units often is not sufficient for criminal prosecution in retrospect. For example if the police request a list of all subscribers camping on a specific cell in a specific period of time after an event, the list might contain several thousand subscribers, most of whom would not be of relevance for the investigation. One major task will be to perform a relevance ranking.

Currently there is no mechanism known to trigger V2x units and MNO cells to preserve data in a higher level of detail then it is usually done. In other words, it is currently not possible to take and save an areal restricted snapshot of all data for a specific point in time.

The present invention provides a method of collecting information relating to an event occurrence, the method comprising: transmitting by a first device a request message in response to the event occurrence, the request message causing one or more request message receiving devices to store and preserve information of possible relevance to the event occurrence, in particular a method of collecting information relating to an event occurrence, the method comprising transmitting by a first device a request message in response to the event occurrence, the request message causing one or more request message receiving devices to store and preserve information of possible relevance to the event occurrence and to transmit an event identifier for enabling subsequent retrieval of the information..

An aspect of the present invention is to provide an arrangement whereby a road user can send an authorized request to other V2x units and MNOs to take and preserve a snapshot of currently available data in order to have sufficient witness information at hand in a later point of time e.g. during prosecution. Such a solution might likely be abused. Therefore several mechanisms to protect the solution from abuse are also provided by the present invention.

Rather than having units communicate with each other and exchange witness information, in an aspect of the present invention, the source node notifies a road infrastructure centre, which notifies as a result of the event the roadside units around the event to keep a snapshot of witness information (maybe even more detailed information) for later examination.

In context of the present invention the term "snapshot" is pertaining to data that may be relevant for prosecution at a later point in time (such as investigations of crime scenes, traffic offenses, and alike) in the broadest possible way and may include:
Pieces of information that are specific to a given use case
Data related to Proximity Services (Who else is around, What is the relationship between subscribers)
Time stamps
Location stamps

Various snapshots can be taken and saved in a multitude of different functional entities (e.g., traffic lights may record their status at certain point in time, cars may record their speed and heading at the same point in time, and so on). Snapshots collected by different entities may contain different sets of information and may be tagged as belonging together.
a) Only request to take and store a snapshot (no data itself are collected)
b) No data have to be confidentiality protected (as no data is requested to "leave" its trusted environment, such as a black box or the MNO's domain, etc.)
c) Authorized communication only
d) Authenticated request
e) Optional protection against service abuse
f) Higher level of detail of collected relevant data
g) Authorized communication with RSUs and v2x units only
h) Snapshot in dashboard camera can be triggered by others than the driver
i) Inter-PLMN exchange of the innovative messages (as not all subscribers may be subscribed to the same wireless network)

Embodiments of the present invention will now be described, by way of example only, with reference to the accompanying drawings in which:
- Fig. 1: is a schematic illustration of possible V2x communications;
- Fig. 2: is a schematic illustration of an embodiment of the invention comprising direct communication;
- Fig. 3: is a schematic illustration of an embodiment of the invention comprising communication via authority; and
- Fig. 4: is an illustration of a system of the present invention.

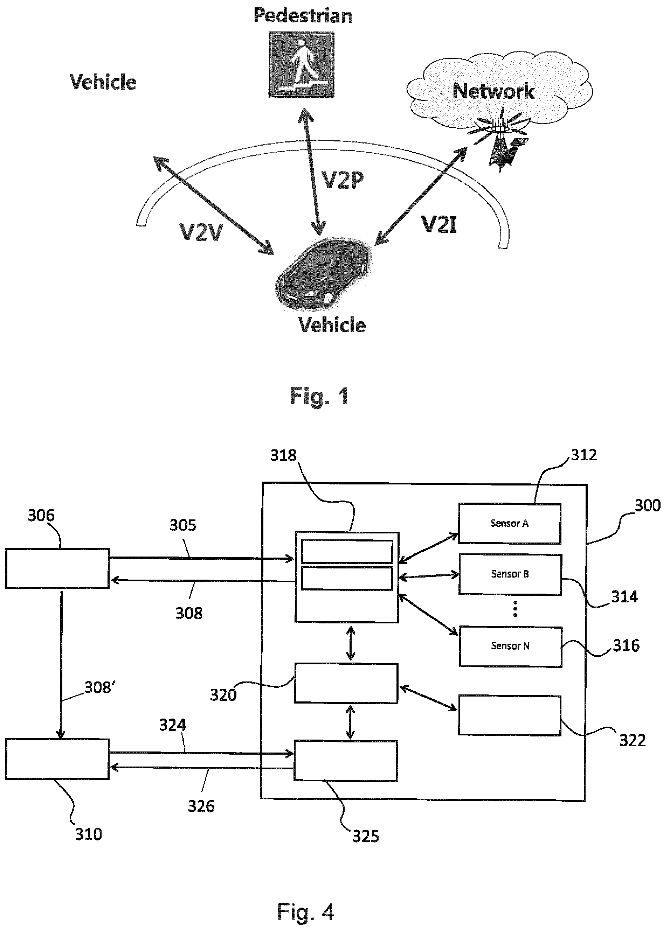

Fig. 1 shows different types of V2x communication for implementing the present invention, namely "vehicle to vehicle", V2V, "vehicle to pedestrian", V2P, and "vehicle to infrastructure", V2I, whereby each of the communication types may be bidirectional with an exchange of data between the two parties.

Embodiments of the present invention are described in detail in connection with an accident scenario but the invention is not so limited. In the following there are two possible embodiments described in more detail, direct communication and communication via authority

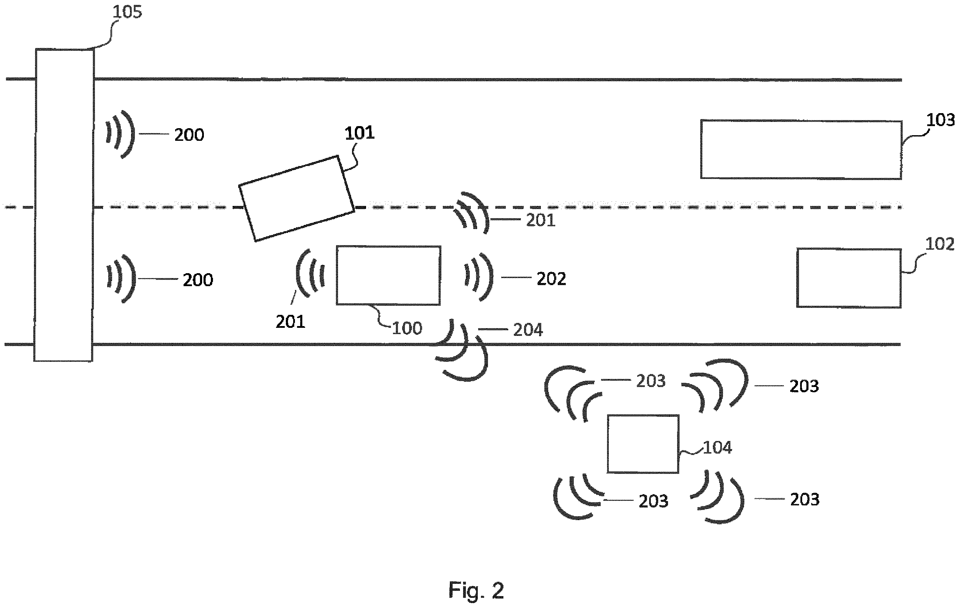

In the example of Fig.2 traffic is flowing on two parallel lanes (e.g., a highway) from right to left. A vehicle 100 is on the left lane of the highway. Another vehicle 101 has been involved in an accident while changing lanes. Vehicle 100 sends out a V2V "emergency vehicle stop" message 202 to following vehicles, namely a car 102 and a truck 103. Roadside unit 105 collects data (e.g. toll collect) and sends traffic information (e.g. radio controlled signs) via V2I communication 200. A mobile network operator has a base station 104 for cellular communication 203 (downlink) and 204 (uplink) close to the highway. The cellular network is used for general-purpose communication as well as V2x communication via infrastructure.

Vehicle 100 broadcasts an authorized snapshot request message 201 via short range V2x communication e.g. Digital Short Range Communication (DSRC). The signal might be integrity protected. The short range broadcast signal is received by other vehicles 102 and 103 and roadside unit 105 and causes all V2x units (e.g. a dashboard camera in the truck 103) to record a "snapshot", i.e. storage of relevant data, starting 5 minutes before the request and ending 10 minutes after the request. It is beneficial that the snapshot is connected with the request via identification information. Another snapshot request is sent by vehicle 100 to the base station 104 via cellular communication 204. The cellular network will take a snapshot of communication related data and location related data. It might also preserve even more detailed data like ProSe relationships and *l* or payload of ongoing voice calls and data sessions during the snapshot period. All taken snapshots can be used during a lawsuit as witness information in the aftermath of the accident.

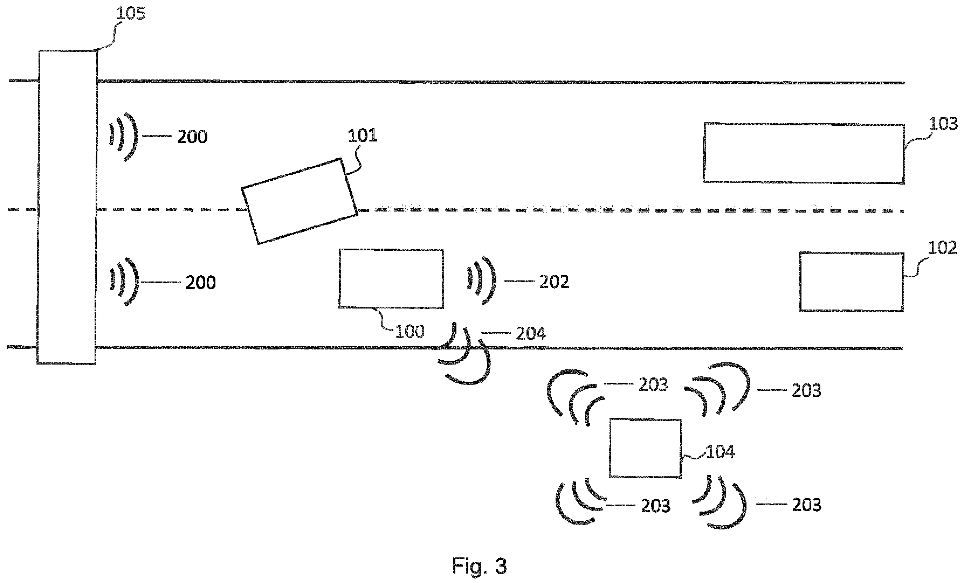

In a further embodiment, shown in Fig. 3, the snapshot request is not broadcast via Short Range Communication (e.g. DSRC), but sent to the base station via cellular communication 204 (e.g. LTE) only. The cellular network forwards the request to other vehicles 102 and 103 and the roadside unit 105. The mobile network operator may forward the request also to other MNOs. The benefits of sending the snapshot request via cellular communication is that all authentication and information security is already in place when the request is sent and that cellular network covers a much wider area than Short Range Communication. For example the next roadside unit may be out of coverage for DSRC but it may well be in coverage of a mobile network. The drawback of this scenario is that not all V2x units may have a cellular connection or that units are connected via different MNOs. This embodiment is illustrated in figure 3.

A combination of both embodiments in which the snapshot request is sent e.g. both via DSRC and LTE is beneficial because it takes advantage of the benefits of both embodiments. Another combination may include that vehicle 100 sends the snapshot request via cellular communication (e.g. LTE) to all MNOs in reach instead of spreading the request by the MNOs interconnection network (e.g. SS7).

As mentioned above it could happen that snapshot requests are sent abusively. For example a driver who easily feels offended by other drivers could frequently request snapshots. There are several options to prevent abusive behaviour. These options could be used stand alone or in any combination with each other:
Charging
   Road users could be charged for the usage of this witness information collection service. The charge could be covered by insurances or have to be paid by an offensive driver in the aftermath of a lawsuit.
Personal Information
   The request message could contain personal information about the requester (e.g. navigation data, current and average speed, etc.).
Authenticate user
   In every case it is useful to have an authentication of a requester.
Limited amount of requests
   The number of allowed requests in a period of time may be limited (e.g. two requests per month allowed)
Automatic requests only; alternatively automatic confirmation only
   A user initiated request for witness information only generates a corresponding request message if at least one sensor indicates an accident (such as an accelerometer) or an event that authorizes the message (such as a full application of the breaks, etc.). A driver may only trigger a request if shortly before he was forced to do a hard braking or a curve while at high speed.

In the following possible modifications to the above arrangements are described.

The requestor may be any entity that can generate a request and authenticate itself. For example:
A vehicle involved in an accident
A mobile device of a user involved in an accident
A vehicle or mobile device of a user not involved but a witness of an accident
An RSU
   Dedicated for that purpose,
   Street furniture (such as a traffic light, or traffic sign, etc.),
   Traffic monitoring devices,
   Public or private video observation camera.

The trigger to generate a request within the requestor may come from a user who notices that an accident has taken place. Alternatively, automatic triggers are possible, e.g.
Sensors may sense an accident of different severeness varying from a scratch made into the car varnish, sensed by a camera or specific sensor, to a triggered air bag or a roll-over sensor.
Video cameras and/or automated video interpretation means may detect an accident.

In addition to submitting requests to other entities, the requestor is always expected to take a snapshot of all information that is available and provide it as witness information.

The devices requested to take a snapshot are in general all entities that can contribute to witness information of a specific event (accident). These can for example be:
RSUs (as above)
Vehicles, that:
   have sensors that can contribute (Video, V2V communication logs, etc.),
   contribute themselves with simply contributing the fact that they have been present at a specific location and time and with a specific status (speed, direction, lights, indicator, etc.)
Mobile device in the area (regardless of the vehicle their user potentially uses)
   Mobile device could show a message to potential witnesses to indicate they have been registered as potential witness and to ensure they remember the situation with an option to make a testimony.
Cellular networks operated in the area of interest
   Information about the type of mobile data traffic may be helpful for later investigations/prosecution (e.g., the fact that a given device was involved in heavy exchange of text messages while the driver was speeding down the highway).

Requested entities may only potentially be witnesses, so a request to contribute may for some entities be a "must contribute" and for some only a "should contribute" with the option to reject the request.

Rejection may be due to explicit unwillingness of the user (after a user interaction he/she selects to not participate) or a default setting ("never participate"). Rejections may also be due to inability to contribute, e.g. because the device has not sensed or the user has not seen anything useful, e.g. because they were driving on the other lane or sleeping as a co-driver.

Theoretically, if all entities in an area were registered at a central unit, the request for witness information could be sent to that unit and would be transmitted to all relevant entities in an appropriate transport way (cellular network, D2D (device to device) / DSRC, broadcast, ...). The authentication of the requesting device, authorization to send a request and following authentication of the request to involved entities can be done by that central unit based on subscriber or device data exchanged during registration or stored in corresponding databases. However, this central unit does not exist and for the different types of devices it may not be an appropriate solution anyway.

The other extreme is to not have any such coordination unit at all. Instead, the device requesting the witness information would use any kind of transport means it has available to request the information from as many devices in the relevant area as it can reach. This obviously is not an optimal way to build the system, as it would rely completely on the requesting device's ability to reach other devices. Also, authentication may be problematic, as the other devices around do not know the requesting device.

Therefore, embodiments of the invention include a hybrid deployment that involves multiple coordination units. The principle is that some devices are registered with a unit that is central for a certain type of devices (we may say they build a sub-network); e.g.
RSUs, traffic signs and traffic lights are coordinated by a network having one or more units that register and control the RSUs etc. These devices are known with their ability to contribute (kind of sensors), their location and their status at the time of the accident.
Mobile cellular devices are registered at their mobile network, similarly with status and location known to the network.
Vehicles may (in addition to their cellular registration) be registered at another unit that controls traffic, e.g. for navigation, collection of road tolls, car control, automated driving, etc. So-called "black boxes" deployed in vehicles (logging relevant status information) may build yet another instance of said sub-networks.

Therefore a request for collection of evidence (or witness information) is optimally sent to a multiple of such coordination units. The request itself does not identify the devices explicitly but leaves it to the coordination units to define (filter) the devices to be involved based on location, time and other information describing the incident, event, or accident.

In another arrangement, devices are not registered but simply perform ad hoc communication based on proximity (D2D, V2x, DSRC, e.g. broadcasting and receiving vehicle status information). The requesting device can directly contact these devices to contribute witness information. The limited reach of the type of communication is an inherent filter mechanism so that only nearby devices are requested to participate in the collection of data. The request may be forwarded over a limited number of hops to extend the area where the request is received, but still the area is limited to a sensible limit.

The cellular network may only be used as a transport means for the witness information request and corresponding answers. But the network could contribute much more:
The inherent authentication of any subscriber device can be used to authenticate the user data.
Location Services of the network can be used to determine the potential witnesses (devices in proximity of the accident) store the determined devices with their location (as known by the network) and a log of requests for witness information sent to the devices for later verification of the information provided by the devices.
The network can act as a controlling entity for the request for witness information. It can receive the request from the requestor and forward it to all relevant sub-networks (other operator's networks, traffic steering networks, RSU networks). This functionality would require the MNO (Mobile Network Operator) to know about the sub-networks that are relevant (and how to address the coordination units of these sub-networks).
The network can also simply forward the request to an entity of the authorities, a witness information controlling unit.

In a preferred arrangement, the network architecture defines an "evidence unit" that is probably maintained by authorities. This unit can register and authenticate any incoming request for collection of evidence (or witness information) and assign a unique identification, ID, (and potentially an encryption key for encryption of any witness information).

The request together with the ID (and key) may then be forwarded appropriately, e.g. the witness information is requested from the coordination units of the sub-networks mentioned above. The ID will later be used to reference the related information in all coordination units, e.g. by law enforcement entities for retrieval of the information.

Once a request for collection of evidence (or witness information) is received by a device and participation of the device in prosecution is foreseen, the relevant sensor data has to be stored or if already stored it has to be saved from deletion.

One way to do so is delivery of all relevant information to the centralized unit, preferably owned by authorities. To secure delivery of the data it should be encrypted with the key delivered in the request and it may be integrity protected by signing it with the key of the user or the device. Delivery is done together with the registered ID (that is not encrypted), so that the data can be uniquely matched with the corresponding incident, event, or accident. The central unit will store the data and retain it for usage by law enforcement authorities at a later point in time if required.

The central storage is a possible way, especially for involved devices that do not have any means to store the data for a longer period (RSUs, mobile devices, etc.).

However, the data collection by a central unit as a result of just a request by a user brings up privacy issues on the one hand side. On the other the delivery of such information without confidence the information is really needed puts quiet a burden on the devices and the network.

So, a different approach is to have all entities that are able to store the information store it and reply to the request for information with a reference information (e.g., a unique identifier) that allows later retrieval of the information if law enforcement authorities require to do so. The entity that stores the information can be the requesting device itself, e.g. the black box of a car that marks the information to not be deleted as a result of the request. It may also be a unit in the sub-net, e.g. a coordination unit in a sensor network of another car, a wireless network operator (MNO), who keeps a record of present devices and their status at the requested time but only provides the information on appropriate lawful instructions.

Some sub-networks may have storage means for this purpose, e.g. traffic steering sub-networks with RSUs und traffic signs and lights may have a central storage means that keep record if requested by the described methods.

Fig. 4 shows an example of a system arrangement in which data is retained until retrieved by authorised users, for example criminal investigators or the police. As shown, a sub-network unit 300 receives a request 305 from a requestor device 306 for the collection of evidence and in response the unit 300 sends an event identifier 308 to the requestor device 306. The requestor device 306 may then either immediately or at a point later in time forward this event identifier as event identifier 308' to the authorities, shown as box 310.

The sub-network unit 300 includes a plurality of sensors 312, 314, 316, for example digital cameras, temperature sensors, visibility sensors etc. which pass data to a coordination unit 318 on request. The coordination unit 318 receives the request 305 from the requestor device 306 and is responsible for performing any necessary authentication and ID generation. The coordination unit passes the data to a storage unit 320 which is connected to a data retention control unit 322. On receipt of a request 324 from the authorities 310 for retrieval of stored information, a reporting unit 325 extracts the relevant data from the storage unit 320 and passes this information back to the authorities as witness information 326.

Fig. 4 shows an example where multiple snapshots or sets of sensor information can be stored upon request in the storage unit 320 that is part of a sub-network controlled by the coordination unit, for example. in a vehicle.

For the storage of data, a minimum/maximum time period for the retention of relevant data (witness information) may be part of the request for collection of evidence. Likewise, the relevant data may be securely stored according to these duration settings. In Fig. 4 the data retention control unit 322 controls retention of witness information.

A requestor should be authenticated before processing the request. This prevents abuse of the system. Furthermore, it allows identification of one party involved within the incident, event, or accident in question.

If the requesting device is authenticated already, e.g. if it is a subscriber of a cellular network authenticated via a Subscriber Identification Module (SIM) against the operator's registration data base, the authenticated identity can be trusted and used.

For that purpose, the operator can provide an authenticated ID to a centralized unit or to any requesting device or sub-network (whatever is appropriate). The ID may be an MSISDN; but that has the drawback of identifying the user clearly. An alternative would be for the purpose of witness information requests to generate a new temporary identity and provide it to requested entities and only send the relation between real live ID (MSISDN or name) and temporary ID to the authorities or even store it only in the operator's network.

Similarly, any other of the mentioned sub-networks may be trusted to provide authentication.

If no authentication is available, the authorities or a centralized coordination unit may need to perform authentication based on trusted device identification (e.g. a trusted platform module in the requesting device) or a SIM-like module in that device.

Data provided in the framework of this invention is sensitive in general. To ensure privacy, the data that is transmitted between involved parties should be encrypted. Centralized units could pre-publish their public key. In order to establish data encryption and *l* or integrity the requesting entity could send its public key together with the witness information request. The requested entity is able to use the key to encrypt the data for requesting entity.

Data integrity is vital to use the information by law enforcement entities. Therefore any party involved may use their private keys to sign the data in order to ensure it is not manipulated while stored.

In case a request is generated, the central unit or the requesting device have to give the event (accident) a unique identifier and provide that ID with every request so that all involved parties can store related data with a corresponding ID. A request to provide the data later will reference the ID and thus the ID is the key information to find all related data.

Once involved entities have received a request to store witness information, they additionally have to ensure the respective authorities will be able to send a request for the data later. That is, as a result of the request feedback information has to be provided back containing an ID of the entity and an acknowledgement that confirms the entity contributes to the process. The feedback may authenticate the entity and it may even contain a description of the data that can later be provided.

The data description may contain time stamps of the data (when the data was recorded, e.g. whether there is only a snapshot of the requested accident time or of the time the request was received or there is video data from the time the request was received onward for a few minutes or for the whole requested period).

The data description may also contain a media description, e.g. voice, video, still image, presence of other devices in proximity, etc.

In a sub-network like the cellular network or the sub-network of an RSUs or the sub-network of a vehicle a consolidating entity may collect reply data from multiple requested entities and provide it on a combined or even consolidated way. Authentication data may authenticate all of the entities at once, the data may be secured collectively only by the consolidating entity (encryption *l* integrity protection) and the data may even be collected and provided together in a single reply message to the request to provide data even though multiple RSUs have provided the data.

The request for witness information sent out may (as mentioned above) not be sent to the relevant entities directly but may be directed to central units within multiple sub-networks. These networks would need to determine in a sub-network specific way, which entities within the sub-network are to be requested. This may done based, for example, on location and time information about the entities or available media. It may also be done by broadcasting a request and receiving replies from the entities that provide information about ability to participate.

As mentioned above, the triggering of a request for witness information may not be free of charge in order to prevent abuse and to share the costs of processing between initiator and the public.

In order to be able to charge for the request, the request will trigger generation of a charging record and provide it to a charging entity. The record contains the authenticated ID of the requestor, the nature of the request and its time and location as a reference.

## Claims

1. A method of collecting information relating to an event occurrence, the method comprising:
transmitting by a first device a request message in response to the event occurrence, the request message causing one or more request message receiving devices to store and preserve information of possible relevance to the event occurrence and to transmit an event identifier for enabling subsequent retrieval of the information.

2. The method according to claim 1, wherein following storage of the information, in response to a retrieval request the stored information is transmitted to one of a requesting device, a wireless network operator and a designated storage device.

3. The method according to any preceding claim, wherein the request message is transmitted by the first device directly to the one or more receiving devices.

4. The method according to any one of claims 1 to 3, wherein the request message is transmitted by the first device to a mobile communication network and the mobile communication network transmits a corresponding request message to the one or more request message receiving devices.

5. The method according to any preceding claim, wherein one or more coordinating units include a register of devices and their functionality for sensing and storing information and in response to a received request message the one or more coordinating units send appropriate request messages to the registered devices in accordance with their functionality.

6. The method according to any preceding claim, wherein one or more of the devices are road vehicles.

7. The method according to claim 6 wherein the first device is one of a road vehicle, a roadside unit, a mobile device and a cellular network infrastructure device.

8. The method according to any preceding claim, wherein the request message is transmitted by the first device both directly to the one or more receiving devices and to a mobile communication network, the mobile communication network transmitting a corresponding request message to the one or more request message receiving devices.

9. A motor vehicle incorporating a communication unit for sending out a request message to another device and optionally arranged to receive a request message originating from another device, the request message requesting a message receiving device to store information relating to a traffic event and and to transmit an event identifier for enabling subsequent retrieval of the information.

10. The motor vehicle according to claim 9, wherein the communication unit is arranged to transmit the request message to the other device directly and/or via a cellular communication infrastructure.

11. The motor vehicle according to claim 9 or claim 10, wherein the communication unit is arranged to transmit the request message in response to an input from an occupant of the vehicle only after a predetermined criterion has been fulfilled.

12. A road side unit incorporating a communication unit arranged to receive a request message from another device to store data relating to a traffic event and a storage device for storing such data, the communication unit being arranged in response to a reception of the request message to store and preserve information of possible relevance to the event occurrence and to transmit an event identifier for enabling subsequent retrieval of the information.
